# EUROPEAN PATENT SPECIFICATION

(11) **EP 3 321 943 B1**
(45) Date of publication and mention of the grant of the patent: **28.10.2020**
(21) Application number: 16461571.8
(22) Date of filing: 11.11.2016
(51) Int. Cl.: H02K 1/22, H01F 7/14, H01F 7/02, H01F 7/122, H01F 7/16, F15B 13/043, F15B 13/044

(54) **IMPROVED SYSTEM AND METHOD FOR ADJUSTING AN AIR GAP IN A SERVOVALVE TORQUE MOTOR AND A NEW TYPE OF TORQUE MOTOR**
VERBESSERTES SYSTEM UND VERFAHREN ZUR ANPASSUNG EINES LUFTSPALTS IN EINEM SERVOVENTILDREHMOMENTMOTOR UND EINER NEUEN ART VON DREHMOMENTMOTOR
SYSTÈME ET PROCÉDÉ AMÉLIORÉS PERMETTANT DE RÉGLER UN ENTREFER DANS UN MOTEUR COUPLÉ À SERVOVANNE ET NOUVEAU TYPE DE MOTEUR COUPLÉ

(43) Date of publication of application: 16.05.2018
(73) Proprietor: Hamilton Sundstrand Corporation, Charlotte, NC 28277 (US)
(72) Inventor: Zak, Maciej, 51-169 Wroclaw (PL); CICHON , Przemyslaw, 55-095 Mirków (PL)
(74) Representative: Dehns

(56) References cited:
- JP-A- 2014 109 328
- US-A- 3 712 339
- US-A1- 2012 068 095

## Description

### TECHNICAL FIELD

The examples described herein relate to a system and method for adjusting an air gap in a servovalve torque motor. The examples also relate to a servovalve itself comprising an improved means of adjusting the air gap therein.

### BACKGROUND

Servovalves (SV) are electrohydraulic/pneumatic systems which include a Torque Motor that functions as a driver for a second part - e.g. a hydraulic/fuel/pneumatic part. Torque motors comprise many separate parts that are individually manufactured and then later assembled together, however, it is not possible to tailor all of these parts to size relative to each other upon initial manufacture. In order to function correctly, the different parts of the servovalve must therefore be adequately adjusted or calibrated, particularly with respect to the air gap present between the poles and armature/plate and pole pieces. A problem, however, is that it is almost impossible to adjust the parts once assembled.

Although the currently used calibration techniques may provide accurate end results, they can also lead to problems/disadvantages.

One method that is currently used for adjusting the air gaps in the torque motor comprises exposing the soft magnetic material of the poles to a very specific heat treatment (Magnetic Heat Treatment MHT) and then the poles are cut or subjected to grinding. Often, however, the performance of the poles may be reduced; for example, the performance may be reduced after Magnetic Heat Treatment due to damage of the magnetic domains during machining.

For example, for the method of using a wire process via an electro-erosion technique to cut the poles of the motor, only wires having a diameter 0.1mm or thinner are allowable or possible and this technique results in an issue with contaminations and the time needed to adjust servovalve. To clean an assembled valve according to the cleanliness class from specification requires once again disassembly of the servovalve, which makes no sense at all because following reassembly the air gap size will once again have changed. In addition to this, this becomes much more expensive and takes a greater amount of time.

One method to tackle the cleanliness problem is to buy a dedicated stand only for this particular component. With this, the risk of contamination is smaller, but the purchase and regular machine cleaning/washing generate additional costs.

When grinding the poles, there are also drawbacks in that it is very risky due to the fact that MHT aligns material (FeNi) crystals in a specific manner in order to provide magnetic permeability at the required level and this results in a broken glass effect and destroys the layer of material. Additionally, this surface may be overheated due to this treatment.

Overheating this surface using a Wire Electrical Discharge Machining (WEDM) process can also change this layer due to spark erosion (it forms a recast layer on the working surface of the Pole Piece). Performance changes are smaller than after grinding because crystals are hidden behind the eroded layer and in grinding process crystals are "smashed or cut" which causes that magnetic field flows randomly.

In summary, the required precision, allowable space for cutting, necessity for assembly and disassembly of the servovalve means that the costs of calibration are high, and the time and effort required for making these parts is also great.

There therefore exists a need for an improved system and method for adjusting the air gaps in a torque motor of a servovalve.

JP 2014 109328 A relates to a servovalve driving device and servovalve. US 3 712 339 A relates to regulating apparatus with throttle gaps. US 2012/062045 A1 relates to torque motor linearization.

### SUMMARY

A torque motor for use in a servovalve is described herein. The torque motor comprising: first and second pole pieces, first and second permanent magnets held between said pole pieces, an armature plate supported between said pole pieces; and first and second magnetic coils coupled to said armature; wherein each of said first and second pole pieces have a "C-shaped" cross section comprising a ring shaped section extending in a first plane with first and second portions extending perpendicularly away from said plane and towards said armature; and further wherein said perpendicularly extending portions are detachable from and attachable to said ring-shaped section of said pole pieces.

In some examples, the detachable/attachable portions are attached to said ring-shaped section via a screw or screws.

Said detachable/attachable portions comprise a protrusion having a first shape and said ring-shaped section comprises a cut-out section of a corresponding shape, for connecting said detachable/attachable portions to said ring-shaped section.

In some examples, said detachable/attachable portions comprise a cut-out section having a first shape and said ring-shaped section comprises a protrusion of a corresponding shape, for connecting said detachable/attachable portions to said ring-shaped section.

A method of calibrating the air gaps in a torque motor of a servovalve is also described herein, the method comprising: assembling said torque motor by providing first and second pole pieces, positioning first and second permanent magnets between said pole pieces, providing an armature plate supported between said pole pieces; and coupling first and second magnetic coils to said armature plate; wherein each of said first and second pole pieces have a "C-shaped" cross-section comprising a ring shaped section extending in a first plane with first and second portions extending perpendicularly away from said plane and towards said armature plate; and further wherein said perpendicularly extending portions are detachable from and attachable to said ring-shaped section of said pole pieces; said method further comprising measuring air gaps e₁ - e₄ between each of said perpendicularly extending portions of the pole pieces and said armature plate; and detaching and removing said perpendicularly extending portions of the pole pieces; altering the dimensions of said perpendicularly extending portions of the pole pieces; and re-attaching said perpendicularly extending portions to said ring-shaped section.

In some examples, the step of re-attaching said perpendicularly extending portions to said ring-shaped section may comprise attaching said detachable/attachable portions to said ring-shaped section via a screw or screws.

Said detachable/attachable portions may comprise a protrusion having a first shape and said ring-shaped section may comprise a cut-out section of a corresponding shape, and said step of re-attaching said perpendicularly extending portions to said ring-shaped section may comprise slotting said protrusion into said cut-out section.

In some examples, said detachable/attachable portions may comprise a cut-out section having a first shape and said ring-shaped section comprises a protrusion of a corresponding shape, and said step of re-attaching said perpendicularly extending portions to said ring-shaped section may comprise slotting said protrusion into said cut-out section.

### BRIEF DESCRIPTION OF THE DRAWINGS

Figure 1 depicts an exploded view of a known torque motor for a servovalve.
Figure 2 depicts a side cross-sectional view of a torque motor, depicting the air gaps e₁ to e₄ between the pole pieces and the armature plate.
Figure 3 depicts a perspective view of an example of a new type of torque motor as described herein, the torque motor being already assembled.
Figure 4 depicts an exploded view of a new type of torque motor for a servovalve as described herein
Figure 5 depicts an exploded view of a new type of torque motor for a servovalve as described herein wherein the first and second perpendicularly extending portions 20c-20f of the pole pieces have been removed for calibration.
Figure 6 depicts a perspective view of an example of a new type of torque motor as described herein, the torque motor being already assembled, wherein the cut-out sections and protrusions are trapezoidal.

### DETAILED DESCRIPTION

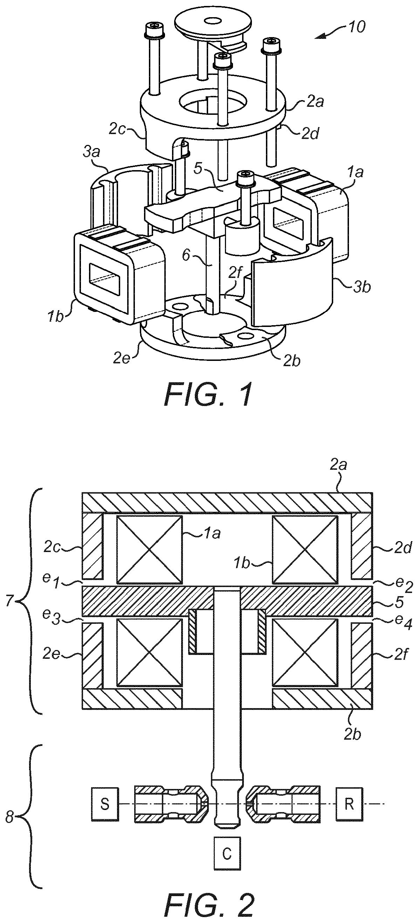

Figure 1 depicts an exploded view of a known servovalve driver/torque motor 10. The torque motor 10 comprises first and second magnetic coils 1a, 1b, first and second pole pieces 2a, 2b, each having a "C-shaped" cross section, first and second permanent magnets 3a, 3b, a spring 4, an armature plate 5 and a flapper 6. The first and second C-shaped pole pieces each comprise a ring shaped section extending in a first plane with first 2c, 2e and second portions 2d, 2f (i.e. the top and bottom of the "C" shape) extending perpendicularly away from the plane in which the ring shaped portion extends. These first and second portions of each pole piece extend perpendicularly away from the plane in the same direction as each other as shown figures 1 and 2. Upon assembly, the first and second pole pieces 2a, 2b are therefore positioned so that the perpendicularly extending portions face each other and also face the armature 5 which is positioned there between.

Figure 2 depicts a side cross-sectional view of a torque motor 10. The same features of the torque motor 10 are indicated with the same reference numerals as figure 1. The torque motor/servovalve driver is indicated with reference 7 and the hydraulic/fuel/pneumatic subsystem is indicated with the reference 8. In this figure, the feature S is the supply port, C is the control port, R is the return port. As is known in the art, these are the channels of a hydraulic/pneumatic subsystem. As is also known in the art, the locations of these ports may not always be in this particular location.

As can be seen in figure 2, the torque motor must be calibrated after assembly of all of the components of figure 1 so that the four air gaps e₁ to e₄ between each of the perpendicularly extending portions 2c-2f of the pole pieces 2a and 2b and the armature/plate 5 are of the correct dimensions and this can result in considerable drawbacks, complications and costs, as outlined above in the background of the invention.

Examples of an improved system and method for adjusting the air gaps e₁ to e₄ in an assembled torque motor for a servovalve will now be described in detail with reference to the drawings. These examples overcome the disadvantages associated with current known techniques and systems as described above in the background of the invention.

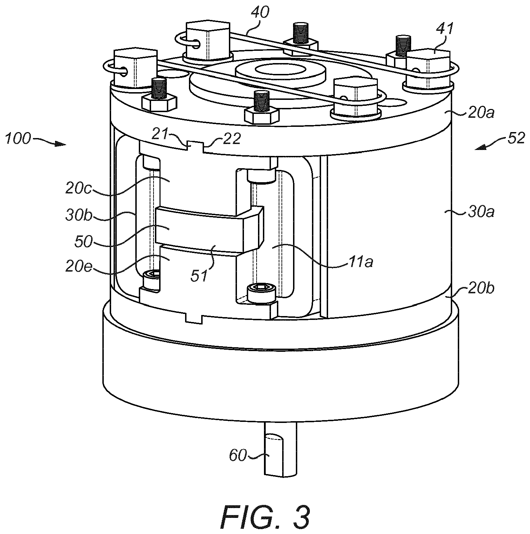

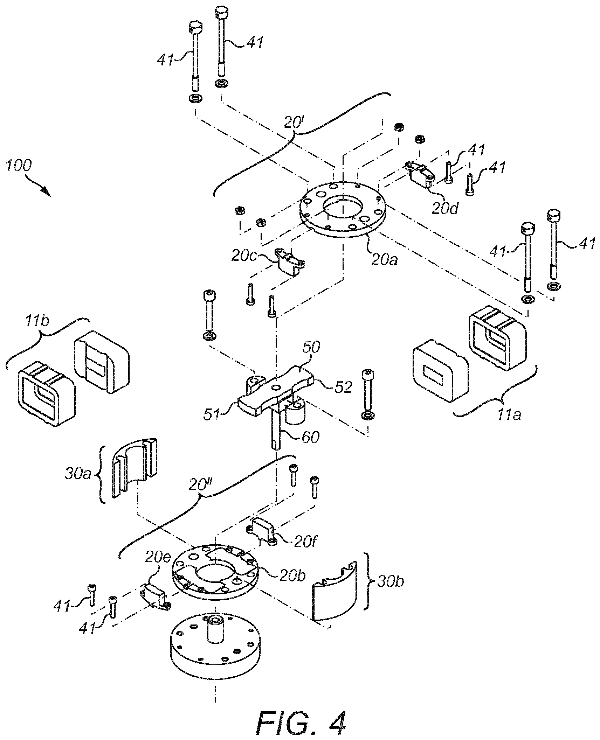

Figure 3 depicts a new and improved example of a servo valve torque motor apparatus 100 that has already been assembled. The main parts of the servo valve torque motor are also shown in figure 4. The majority of the features of the new type of torque motor are the same as in the standard motor as shown in figure 1. That is, the torque motor 100 comprises first and second magnetic coils 11a, 11b, first and second pole pieces 20', 20", first and second permanent magnets 30a, 30b, a spring 40 (not shown as this is internal to the other features), an armature plate 50 and a flapper 60. The motor may also have locking wires 40 which may be used to prevent the loosening of the screws. In alternative arrangements, glue may be used instead of/in conjunction with the locking wires 40.

The first and second pole pieces 20', 20" (having a "C-shaped cross section) again each comprise a ring shaped section 20a, 20b extending in a first plane with first 20c, 20e and second portions 20d, 20f (i.e. the top and bottom of the "C" shape) extending perpendicularly away from the plane in which the ring shaped section 20a, 20b extends. These first and second portions 20c-20f of each pole piece again extend perpendicularly away from the plane in the same direction as each other as is the case with the example shown in figures 1 and 2, and upon assembly, the first and second pole pieces 20a, 20b are positioned so that the perpendicularly extending portions 20c-20f face each other and also face the armature 50 which is positioned there between.

The pole pieces 20', 20" of this example hold the magnets 30a, 30b between them, may be made of a soft magnetic material and have a similar or identical shape to each other. In the example shown in figure 3, the torque motor comprises two magnets 30a, 30b mounted symmetrically between the pole pieces 20', 20", however, other numbers of magnets may be used, as is known in the art.

As is described above, the torque motor 100 may further comprise a pair of coils 11a, 11b that are coupled to the armature 50 that is mounted at its center to a torsion beam (not shown as it is internal and cannot be seen). The armature 50 extends from a first end 51 to a second end 52 and the coils 11a, 11b may further have windings passing around the armature 50 at both ends 51, 52 of the armature 50.

The first 51 and second ends 52 of the armature 50 extend between the perpendicular portions 20c-20f of the pole pieces 20', 20" as shown in figure 3. These outer ends of the armature 50 extend between soft magnetic poles 12 of the inward facing sections of the pole pieces 20c-20f. The armature 50 is supported for rotational movement about the center of the pole pieces 20', 20", with the ends of the armature 50 moving toward or away from the pole pieces. As is known in the art, the magnets 30a, 30b may be fixed to the pole pieces by mechanical fixings 41. The magnets 30a, 30b are therefore "sandwiched" between the pole pieces 20', 20".

Unlike in the known torque motors, such as that shown in figure 1, the new type of torque motors described herein with reference to figures 3 to 5 comprise pole pieces 20', 20", wherein the perpendicularly extending portions 20c-20f of the C-shaped pole pieces 20', 20" are detachable from and attachable to the ring-shaped section 20a, 20b of each of the pole pieces 20', 20" as shown in figures 3 to 5.

The entire pole piece 20', 20" is conductive including the ring-shaped section 20a, 20b, as well as the detachable/attachable portions which can be separated from the ring-shaped section 20a, 20b of each pole piece 20', 20".

The detachable, sections 20c-20f of the pole pieces may be attached so as to extend perpendicularly to the plane of the ring-shaped section 20a, 20b via differing means. One means may be the use of stock screws 41 to fix them to the ring section 20a, 20b. This method makes the assembly cheaper.

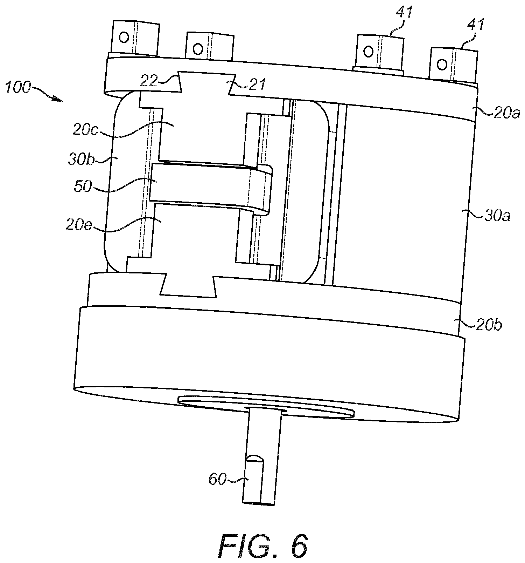

A shaped connection is used, as is depicted in figure 3, wherein a shape of a cut-out section 22 in the underside of the ring-shaped section 20a, 20b corresponds to a correspondingly shaped protrusion 21 on detachable portion. The detachable portion 20c-20f can then be slotted into place. In some examples, the protrusion may be provided on the ring-shaped section 20a, 20b and the cut-out section 22 may be provided on the detachable portion 20c-20f. This method makes the assembly cheaper. In addition to this, this shaped-connection method reduces the likelihood of positioning the detachable sections in the wrong position. These cut-out/protrusions can be any shape and in some examples, such as that shown in figure 6, the shape is trapezoidal. With such shapes, the need for extra screws 41 may be eliminated as the cut-out sections and protrusions themselves provide sufficient fit to hold the pole pieces 20', 20" together.

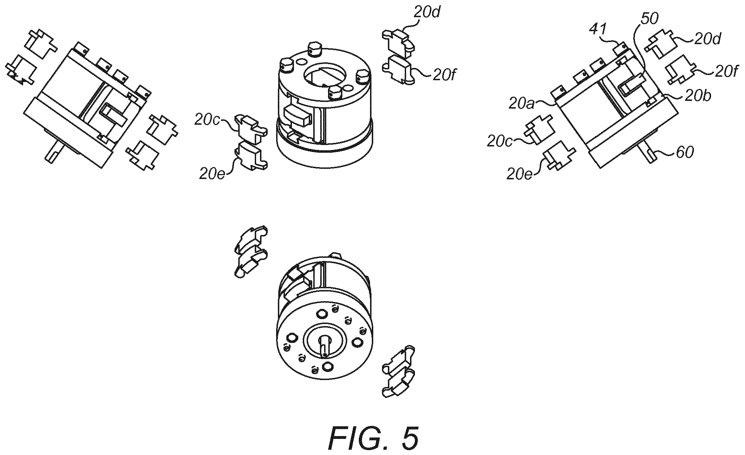

Due to this unique detachable/attachable feature of the pole pieces described herein, a new method of calibrating the air gaps in a torque motor 100 of a servovalve may therefore comprise the steps of assembling the torque motor by providing first and second pole pieces 20', 20", positioning first and second permanent magnets 30a, 30b between the pole pieces 20', 20", providing an armature plate 50 supported between the pole pieces 20', 20"; and coupling first and second magnetic coils 11a, 11b to the armature plate 50. As described above, each of the first and second pole pieces 20', 20" have a "C-shaped" cross-section comprising a ring shaped section 20a, 20b extending in a first plane with first 20c, 20e and second portions 20d, 20f extending perpendicularly away from that plane. The method further comprises assembling all of the components of the torque motor and then measuring the air gaps e₁ - e₄ between the perpendicularly extending portions 20c-20f of the pole pieces and armature plate 50 as is normally done and as shown in figure 2. Since the perpendicularly extending portions 20c-20f are detachable from and attachable to the ring-shaped section 20a, 20b of the pole pieces 20', 20", the new method of calibrating the torque motor that is described herein further comprises the steps of detaching and removing the perpendicularly extending portions 20c-200f of the pole pieces from the ring-shaped section 20a, 20b and altering the dimensions of the perpendicularly extending portions 20c-20f of the pole pieces (with the remainder of the torque motor assembly remaining intact), as is shown in figure 5; and then, once the detachable parts have been altered in such a way as to create the correct size air gaps, re-attaching the perpendicularly extending portions (20c-20f) to the ring-shaped section (20a, 20b) to result in a torque motor assembly having the correct sized air gaps therein.

In some examples, the step of re-attaching the perpendicularly extending portions 20c-20f to the ring-shaped section 20a, 20b comprises attaching the detachable/attachable portions to the ring-shaped section via a screw or screws 41.

The detachable/attachable portions 20c-20f comprise a protrusion 21 having a first shape and the ring-shaped section 20a, 20b comprises a cut-out section 22 of a corresponding shape, and the step of re-attaching the perpendicularly extending portions 2c-2f to the ring-shaped section 20a, 20b comprise slotting the protrusion 21 into the cut-out section 22. This method of attachment may further use screws.

In some examples, the detachable/attachable portions 2c-2f comprise a cut-out section 23 having a first shape and the ring-shaped section 20a, 20b comprises a protrusion 24 of a corresponding shape, and the step of re-attaching the perpendicularly extending portions 20c-20f to the ring-shaped section 20a, 20b comprises slotting the protrusion 24 into the cut-out section 23. This method of attachment may also be used as an alternative to, or in addition to, the use of screws and/or the presence of the cut-out section being on the detachable portions as described above.

In contrast to the known torque motors, by providing pole pieces such as these wherein the perpendicularly extending portions 20c-20f are detachable/attachable/removable, the method of adjusting the air gap is greatly improved in terms of both ease and accuracy.

For example, the torque motor 100 may be assembled, the air gaps e₁ - e₄ measured, and then the detachable portions 20c-20f of the pole pieces 20', 20" may be removed. The dimensions of those detachable portions 20c-20f can then be easily adjusted before being reinserted, fixed or slotted back into position within the assembled structure.

As described above, this can be achieved just by unscrewing a couple of screws 41 or by replacing elements. This also results in allowing the air gap to be very accurately formed and without creating the material or manufacturing (or indeed other unexpected) problems that are associated with known devices, as described above in the background section of the present application.

This new type of torque motor therefore provides an assembly that allows for a much easier process of calibration/adjustment. There are also lower requirements for the dimensions of the pole pieces used. The requirements for the armature and magnet heights are also lower. This is highly advantageous since the magnet height is one of the key features in the tolerance analysis when upper Air Gaps are calculated.

With regards to the armature, the current brazing process for the armature is complicated, because three elements (in this design: the Plate, the Torsion Bridge, and the Flapper) must be brazed with very high geometrical requirements. Additionally, with current methods, the armature must have additional machining operations performed after brazing to keep a few important dimensions. The new methods and devices described herein therefore also overcome these problems.

Another advantage to the examples described herein is that, since no additional processes such as WEDM, grinding or similar are required, there would be no change in the material properties (e.g. the conductivity, magnetic permeability etc.) of the soft magnetic material parts of the assembly

There is also no need to assemble, disassemble and measure the values of the air gaps for each process step, as all that is required is to assemble the motor and then remove the detachable/attachable portions and alter the air gaps via changing these detachable portions. This not only saves time but also reduces the costs of the whole servovalve.

Although slightly more parts are required (in that the detachable parts are manufactured separately to the ring shaped section). The manufacture of such parts is actually easier than manufacturing the "C-shaped" pole pieces in one piece.

## Claims

1. A torque motor (100) for use in a servovalve comprising:
first and second pole pieces (20', 20"),
first and second permanent magnets (30a, 30b) held between said pole pieces (20', 20"),
an armature plate (50) supported between said pole pieces (20', 20"); and
first and second magnetic coils (11a, 11b) coupled to said armature (50);
wherein each of said first and second pole pieces (20', 20") have a "C-shaped" cross-section comprising a ring-shaped section (20a, 20b) extending in a first plane with first (20c, 20e) and second portions (20d, 20f) extending perpendicularly away from said plane and towards said armature (50); and further wherein said perpendicularly extending portions (20c-20f) are detachable from and attachable to said ring-shaped section (20a, 20b) of said pole pieces (20', 20"); and **characterised in that**
said detachable/attachable portions (20c-20f) comprise a protrusion (21) having a first shape and said ring-shaped section (20a, 20b) comprises a cut-out section (22) of a corresponding shape, for connecting said detachable/attachable portions to said ring-shaped section (20a, 20b); and
wherein the protrusion and cut-out section are configured to allow the slotting of said protrusion into said cut-out section.

2. The torque motor (100) of claim 1 wherein said detachable/attachable portions (20c-20f) are attached to said ring-shaped section (20a, 20b) via a screw or screws (41).

3. The torque motor (100) of claim 1 or 2 wherein said detachable/attachable portions (20c-20f) comprise a cut-out section (23) having a first shape and said ring-shaped section (20a, 20b) comprises a protrusion (24) of a corresponding shape, for connecting said detachable/attachable portions to said ring-shaped section (20a, 20b).

4. A method of calibrating the air gaps in a torque motor (100) of a servovalve comprising:
assembling said torque motor (100) by providing first and second pole pieces (20', 20"),
positioning first and second permanent magnets (30a, 30b) between said pole pieces (20', 20"),
providing an armature plate (50) supported between said pole pieces (20', 20"); and coupling first and second magnetic coils (11a, 11b) to said armature plate (50);
wherein each of said first and second pole pieces (20', 20") have a "C-shaped" cross-section comprising a ring shaped section (20a, 20b) extending in a first plane with first (20c, 20e) and second portions (20d, 20f) extending perpendicularly away from said plane and towards said armature plate (50); and further wherein said perpendicularly extending portions (20c-20f) are detachable from and attachable to said ring-shaped section (20a, 20b) of said pole pieces (20', 20");
said method of calibrating further comprising the steps of measuring air gaps e₁ - e₄ between said perpendicularly extending portions (20c-20f) of the pole pieces and said armature plate (50); and
detaching and removing said perpendicularly extending portions (20c-20f) of the pole pieces;
altering the dimensions of said perpendicularly extending portions (20c-20f) of the pole pieces; and
re-attaching said perpendicularly extending portions (20c-20f) to said ring-shaped section (20a, 20b); and **characterised in that**
said detachable/attachable portions (20c-20f) comprise a protrusion (21) having a first shape and said ring-shaped section (20a, 20b) comprises a cut-out section (22) of a corresponding shape, and wherein said step of re-attaching said perpendicularly extending portions (20c-20f) to said ring-shaped section (20a, 20b) comprises slotting said protrusion (21) into said cut-out section (22)

5. The method of claim 4 wherein said step of re-attaching said perpendicularly extending portions (20c-20f) to said ring-shaped section (20a, 20b) comprises attaching said detachable/attachable portions (20c/20f) to said ring-shaped section (20a, 20b) via a screw or screws (41).

6. The method of claim 4 or 5 wherein said detachable/attachable portions (20c-20f) comprise a cut-out section (23) having a first shape and said ring-shaped section (20a, 20b) comprises a protrusion (24) of a corresponding shape, and wherein said step of re-attaching said perpendicularly extending portions (20c-20f) to said ring-shaped section (20a, 20b) comprises slotting said protrusion (24) into said cut-out section (23).

## Patentansprüche

1. Drehmomentmotor (100) zur Verwendung in einem Servoventil, umfassend:
ein erstes und zweites Polstück (20'; 20"),
einen ersten und zweiten zwischen den Polstücken (20'; 20") gehaltenen Permanentmagneten (30a, 30b),
eine zwischen den Polstücken (20'; 20") getragene Ankerplatte (50); und
eine erste und zweite an den Anker (50) gekoppelte Magnetspule (11a, 11b);
wobei jedes von dem ersten und zweiten Polstück (20'; 20") einen "C-förmigen" Querschnitt aufweist, umfassend einen ringförmigen Bereich (20a, 20b), der sich in einer ersten Ebene mit dem ersten (20c, 20e) und zweiten Abschnitt (20d, 20f) erstreckt, die sich senkrecht von der Ebene weg und zu dem Anker (50) hin erstrecken; und ferner wobei die sich senkrecht erstreckenden Abschnitte (20c-20f) von dem ringförmigen Bereich (20a, 20b) der Polstücke (20'; 20") lösbar und an diesem anbringbar sind; und **dadurch gekennzeichnet, dass**
die lösbaren/anbringbaren Abschnitte (20c-20f) einen Vorsprung (21) umfassen, der eine erste Form aufweist, und der ringförmige Bereich (20a, 20b) einen Ausschnittbereich (22) einer entsprechenden Form umfasst, um die lösbaren/anbringbaren Abschnitte mit dem ringförmigen Bereich (20a, 20b) zu verbinden; und
wobei der Vorsprung und der Ausschnittbereich so konfiguriert sind, dass sie das Einschieben des Vorsprungs in den Ausschnittbereich ermöglichen.

2. Drehmomentmotor (100) nach Anspruch 1, wobei die lösbaren/anbringbaren Abschnitte (20c-20f) an dem ringförmigen Bereich (20a, 20b) mittels einer Schraube oder Schrauben (41) angebracht sind.

3. Drehmomentmotor (100) nach Anspruch 1 oder 2, wobei die lösbaren/anbringbaren Abschnitte (20c-20f) einen Ausschnittbereich (23) umfassen, der eine erste Form aufweist, und der ringförmige Bereich (20a, 20b) einen Vorsprung (24) einer entsprechenden Form umfasst, um die lösbaren/anbringbaren Abschnitte mit dem ringförmigen Bereich (20a, 20b) zu verbinden.

4. Verfahren zum Kalibrieren der Luftspalten in einem Drehmomentmotor (100) eines Servoventils, umfassend:
Montieren des Drehmomentmotors (100) durch Bereitstellen von einem ersten und zweiten Polstück (20'; 20"),
Positionieren eines ersten und zweiten Permanentmagnets (30a, 30b) zwischen den Polstücken (20'; 20"),
Bereitstellen einer zwischen den Polstücken (20'; 20") getragenen Ankerplatte (50); und Koppeln der ersten und zweiten Magnetspule (11a, 11b) an die Ankerplatte (50);
wobei jedes von dem ersten und zweiten Polstück (20'; 20") einen "C-förmigen" Querschnitt aufweist, umfassend einen ringförmigen Bereich (20a, 20b), der sich in einer ersten Ebene mit dem ersten (20c, 20e) und zweiten Abschnitt (20d, 20f) erstreckt, die sich senkrecht von der Ebene weg und zu dem Anker (50) hin erstrecken; und ferner wobei die sich senkrecht erstreckenden Abschnitte (20c-20f) von dem ringförmigen Bereich (20a, 20b) der Polstücke (20'; 20") lösbar und an diesem anbringbar sind;
wobei das Verfahren des Kalibrierens ferner die Schritte des Messens von Luftspalten e₁-e₄ zwischen den sich senkrecht erstreckenden Abschnitten (20c-20f) der Polstücke und der Ankerplatte (50) umfasst; und
Lösen und Entfernen der sich senkrecht erstreckenden Abschnitte (20c-20f) der Polstücke;
Ändern der Abmessungen der sich senkrecht erstreckenden Abschnitte (20c-20f) der Polstücke; und
erneutes Anbringen der sich senkrecht erstreckenden Abschnitte (20c-20f) an den ringförmigen Bereich (20a, 20b); und **dadurch gekennzeichnet, dass**
die lösbaren/anbringbaren Abschnitte (20c-20f) einen Vorsprung (21) umfassen, der eine erste Form aufweist, und der ringförmige Bereich (20a, 20b) einen Ausschnittbereich (22) einer entsprechenden Form umfasst, und wobei der Schritt des erneuten Anbringens der sich senkrecht erstreckenden Abschnitte (20c-20f) an den ringförmigen Bereich (20a, 20b) das Einschieben des Vorsprungs (21) in den Ausschnittbereich (22) umfasst.

5. Verfahren nach Anspruch 4, wobei der Schritt des erneuten Anbringens der sich senkrecht erstreckenden Abschnitte (20c-20f) an den ringförmigen Bereich (20a, 20b) das Anbringen der lösbaren/anbringbaren Abschnitte (20c-20f) an den ringförmigen Bereich (20a, 20b) mittels einer Schraube oder Schrauben (41) umfasst.

6. Verfahren nach Anspruch 4 oder 5, wobei die lösbaren/anbringbaren Abschnitte (20c-20f) einen Ausschnittbereich (23) umfassen, der eine erste Form aufweist, und der ringförmige Bereich (20a, 20b) einen Vorsprung (24) einer entsprechenden Form aufweist, und wobei der Schritt des erneuten Anbringens der sich senkrecht erstreckenden Abschnitte (20c-20f) an den ringförmigen Bereich (20a, 20b) das Einschieben des Vorsprungs (24) in den Ausschnittbereich (23) umfasst.

## Revendications

1. Moteur couplé (100) destiné à être utilisé dans une servovanne comprenant :
des première et seconde pièces polaires (20', 20''),
des premier et second aimants permanents (30a, 30b) maintenus entre lesdites pièces polaires (20', 20''),
une plaque d'armature (50) supportée entre lesdites pièces polaires (20', 20'') ; et
des première et seconde bobines magnétiques (11a, 11b) couplées à ladite armature (50) ;
dans lequel chacune desdites première et seconde pièces polaires (20', 20'') a une section transversale en « C » comprenant une section en forme d'anneau (20a, 20b) s'étendant dans un premier plan avec des premières (20c, 20e) et des secondes parties (20d, 20f) s'étendant perpendiculairement à distance dudit plan et vers ladite armature (50) ; et en outre dans lequel lesdites parties s'étendant perpendiculairement (20c-20f) peuvent être détachées et attachées à ladite section en forme d'anneau (20a, 20b) desdites pièces polaires (20', 20'') ; et **caractérisé en ce que**
lesdites parties détachables/attachables (20c-20f) comprennent une saillie (21) ayant une première forme et ladite section en forme d'anneau (20a, 20b) comprend une section découpée (22) d'une forme correspondante, pour relier lesdites parties détachables/attachables à ladite section en forme d'anneau (20a, 20b) ; et
dans lequel la saillie et la section découpée sont configurées pour permettre le rainurage de ladite saillie dans ladite section découpée.

2. Moteur couplé (100) selon la revendication 1, dans lequel lesdites parties détachables/attachables (20c-20f) sont fixées à ladite section en forme d'anneau (20a, 20b) via une vis ou des vis (41).

3. Moteur couplé (100) selon la revendication 1 ou 2, dans lequel lesdites parties détachables/attachables (20c-20f) comprennent une section découpée (23) ayant une première forme et ladite section en forme d'anneau (20a, 20b) comprend une saillie (24) d'une forme correspondante, pour relier lesdites parties détachables/attachables à ladite section en forme d'anneau (20a, 20b).

4. Procédé d'étalonnage des entrefers dans un moteur couplé (100) d'une servovanne comprenant :
l'assemblage dudit moteur couplé (100) en fournissant des première et seconde pièces polaires (20', 20"),
le positionnement de premier et second aimants permanents (30a, 30b) entre lesdites pièces polaires (20', 20''),
la fourniture d'une plaque d'armature (50) supportée entre lesdites pièces polaires (20', 20'') ; et le couplage des première et seconde bobines magnétiques (11a, 11b) à ladite plaque d'armature (50) ;
dans lequel chacune desdites première et seconde pièces polaires (20', 20'') a une section transversale en « C » comprenant une section en forme d'anneau (20a, 20b) s'étendant dans un premier plan avec des premières (20c, 20e) et secondes parties (20d, 20f) s'étendant perpendiculairement à distance dudit plan et vers ladite armature (50) ; et en outre dans lequel lesdites parties s'étendant perpendiculairement (20c-20f) peuvent être détachées et attachées à ladite section en forme d'anneau (20a, 20b) desdites pièces polaires (20', 20") ;
ledit procédé d'étalonnage comprenant en outre les étapes de mesure d'entrefers e₁-e₄ entre lesdites parties s'étendant perpendiculairement (20c-20f) des pièces polaires et ladite plaque d'armature (50) ; et
le détachement et le retrait desdites parties s'étendant perpendiculairement (20c-20f) des pièces polaires ;
la modification des dimensions desdites parties s'étendant perpendiculairement (20c-20f) des pièces polaires ; et
le rattachement desdites parties s'étendant perpendiculairement (20c-20f) à ladite section en forme d'anneau (20a, 20b) ; et **caractérisé en ce que**
lesdites parties détachables/attachables (20c-20f) comprennent une saillie (21) ayant une première forme et ladite section en forme d'anneau (20a, 20b) comprend une section découpée (22) d'une forme correspondante, et dans lequel ladite étape de rattachement desdites parties s'étendant perpendiculairement (20c-20f) à ladite section en forme d'anneau (20a, 20b) comprend le rainurage de ladite saillie (21) dans ladite section découpée (22).

5. Procédé selon la revendication 4, dans lequel ladite étape de rattachement desdites parties s'étendant perpendiculairement (20c-20f) à ladite section en forme d'anneau (20a, 20b) comprend la fixation desdites parties détachables/attachables (20c-20f) à ladite section en forme d'anneau (20a, 20b) via une vis ou des vis (41).

6. Procédé selon la revendication 4 ou 5, dans lequel lesdites parties détachables/attachables (20c-20f) comprennent une section découpée (23) ayant une première forme et ladite section en forme d'anneau (20a, 20b) comprend une saillie (24) d'une forme correspondante, et dans lequel ladite étape de rattachement desdites parties s'étendant perpendiculairement (20c-20f) à ladite section en forme d'anneau (20a, 20b) comprend le rainurage de ladite saillie (24) dans ladite section découpée (23).
